# EUROPEAN PATENT APPLICATION

(11) **EP 1 871 032 A1**
(43) Date of publication of application: **26.12.2007**
(21) Application number: 07011984.7
(22) Date of filing: 19.06.2007
(51) Int. Cl.: H04L 1/18

(54) **Method and apparatus for detection and recovery of HARQ DTX-to-NACK error**

(30) Priority: 19.06.2006 US 805098 P
(71) Applicant: Innovative Sonic Limited, Tortola (VG)
(72) Inventor: Kuo, Richard Lee-Chee, Taipei City (TW); Jiang, Sam Shiaw-Shiang, Taipei City (TW); Tseng, Li-Chih, Taipei City (TW)
(74) Representative: Hager, Thomas Johannes

(57) **Abstract**

A DTX to NACK error in a transmission in an HARQ of a mobile communications system can cause packet loss. To prevent the packet loss, when a transport block size indicator and a transmission status indicator are received (302), the DTX to NACK error is detected when the transport block size indicator indicates that the transmission is a retransmission and the transmission status indicator indicates that the transmission is a new transmission (304), and an error report with information indicating a lost transport block is sent to the HARQ transmitter (306).

## Description

This application claims the benefit of U.S. Provisional Application No. 60/805,098, filed on June 19, 2006 and entitled "Method and Apparatus for Detection and Recovery of HARQ DTX to NACK Error," the contents of which are incorporated herein by reference.

The present invention relates to a method of detecting a DTX to NACK error in an HARQ process of a mobile communications system and related communications device according to the pre-characterizing clauses of claims 1, 6 and 10.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates.

Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

HSUPA increases upstream network performance, reduces transmission delay by rapid retransmission of erroneous data transmissions, and can adjust transmission rate based on channel quality. To realize this type of "power control," HSUPA adopts technologies such as NodeB Scheduling, Hybrid Automatic Repeat Request (HARQ), Soft Handover, and Short Frame Transmission. Correspondingly, the 3rd Generation Partnership Project (3GPP) defines an Enhanced Dedicated Transport Channel (E-DCH) for controlling operations of HSUPA. E-DCH introduces new physical layer channels, such as E-HICH, E-RGCH, E-AGCH, E-DPCCH, and E-DPDCH, which are used for transmitting HARQ ACK/NACK, Uplink Scheduling Information, Control Plane information, and User Plane information. Detailed definitions of the above can be found in the Medium Access Control (MAC) protocol specification, "3GPP TS 25.321 V7.0.0," and are not given here.

The HARQ assists an ARQ, with the goal of removing ARQ-level status reporting. To accomplish this goal, HARQ-level packet loss detection should be able to meet higher-layer QoS requirements. In the prior art, packet loss in the HARQ is handled for two events:
1) NACK/ACK error - an HARQ NACK signal is mistakenly interpreted as an HARQ ACK signal; and
2) DTX/ACK error - DTX, which represents that the HARQ receiver did not report ACK nor NACK, is mistakenly interpreted as the HARQ ACK signal.

The NACK/ACK error is detectable in the HARQ receiver, and the receiver can send a NACK/ACK error report to the HARQ transmitter when the HARQ receiver detects the NACK/ACK error. When the HARQ transmitter receives the NACK/ACK error report, the HARQ transmitter sends a local NACK to the ARQ transmitter. At this point, the ARQ Tx can begin retransmission of the lost packet. The DTX/ACK error is not detectable by the HARQ receiver, and is considered to have a very low probability of occurring, so the prior art does not handle the DTX/ACK error, or leaves the DTX/ACK error to be handled by the Node B.

Other than the NACK/ACK error and the DTX/ACK error described above, a DTX/NACK error, which is not handled in the prior art, can also occur. A New Data Indicator (NDI) indicates whether a transmission contains new data or old data. The NDI is sent with the transmission on a different control channel. For each new data block, the NDI is incremented, so the receiver can use the NDI to determine whether a data block contains new data or old data. As described in Section 11.6.2.2 of the MAC specification, if the NDI is incremented with respect to a previously received data block, data in a soft buffer related to a current HARQ process is replaced. If the NDI is the same as in a previously received data block, and the data block has not been decoded successfully yet, the received data is combined with the data in the soft buffer.

In HSDPA, two parameters are used to determine transport block (TB) size. One parameter is a Transport Format and Resource Indicator (TFRI) value, which ranges from 0 to 63. The other is a *k_{0,i}* value corresponding to a combination chosen by the Node B. A sum of the TFRI and the *k_{0,i}* forms an index for finding actual TB size. In general, the TB size can be found from the two parameters. However, when the TFRI is 63 (111111), the TB size of the transmission is the same as the TB size of the previous transmission.

As mentioned above, the DTX/NACK error not disclosed in the prior art can occur, causing packet loss in the HARQ. The following example is used to illustrate the DTX/NACK error. Assume the Node B transmitter sends a first transmission, in which TFRI = 22, NDI = 0, and TSN (Transmission Sequence Number) = 8. The UE receiver receives the first transmission successfully. Then, the Node B sends a second transmission, in which TFRI = 28, NDI = 1, and TSN = 12. If the UE receiver does not receive the second transmission, the UE does not do anything, i.e. DTX. At this time, the DTX/NACK error occurs, i.e. the Node B interprets the DTX as a NACK because the Node B has not received the anticipated ACK indicator. In the prior art, the Node B transmitter then retransmits the second transmission, this time changing the TFRI to 63, and leaving the NDI and the TSN the same as the previous transmission, i.e. 1 and 12, respectively. When the UE receiver receives the retransmitted second transmission, a dilemma occurs, because the TFRI indicates the retransmission, but the NDI indicates the new data. And, because the TFRI is 63, the UE receiver cannot determine the transport block size due to the DTX/NACK error. In the prior art, the UE receiver would still respond with an ACK, and the Node B would assume that the retransmitted second transmission was received successfully, thus not performing retransmission any more, causing a packet loss.

This in mind, the present invention aims at providing a method of detecting and recovering a DTX to NACK error in an HARQ process of a mobile communications system and related communications device that can respond more quickly to the residual errors caused by the DTX/NACK error and reduce delays caused by detection of lost packets in the upper layer.

This is achieved by a method of detecting and recovering a DTX to NACK error in an HARQ process of a mobile communications system and related communications device according to claims 1, 6 and 10. The dependent claims pertain to corresponding further developments and improvements.

As will be seen more clearly from the detailed description following below, the claimed method of detecting and recovering a DTX to NACK error in an HARQ process of a mobile communications system and related communications device includes receiving a transport block size indicator and a transmission status indicator sent from an HARQ transmitter; detecting the DTX to NACK error according to the transport block size indicator and the transmission status indicator; and sending an error report with information indicating a lost transport block to the HARQ transmitter when the DTX to NACK error is detected.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to an embodiment of the present invention.

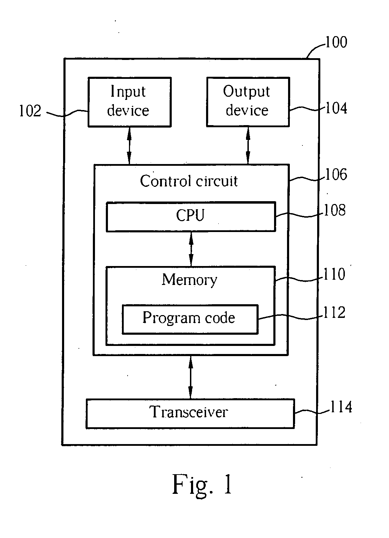

Please refer to Fig. 1, which is a function block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

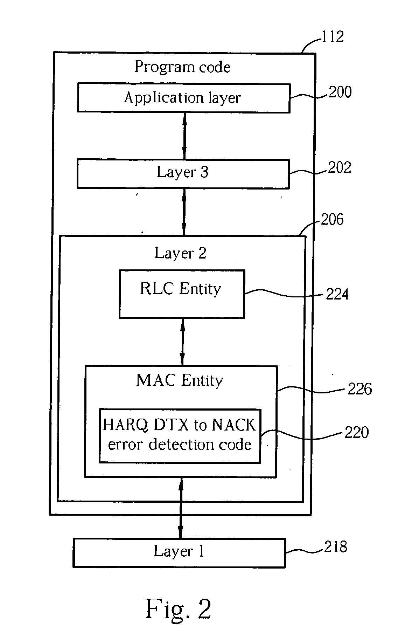

Please continue to refer to Fig. 2. Fig.. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing segmentation, reassembly, concatenation, padding, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

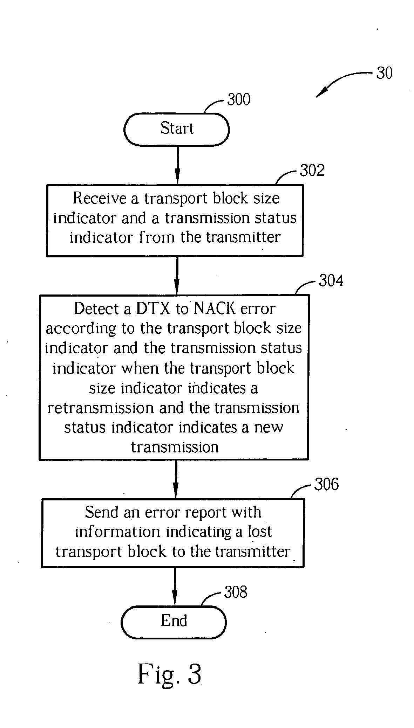

An HARQ of the MAC entity 226 in the present invention can prevent packet loss from occurring due to the DTX/NACK error described above. An embodiment of the present invention provides an HARQ DTX to NACK error detection code program code 220 utilized for detecting and recovering from the HARQ DTX/NACK error. Please refer to Fig. 3, which is a flowchart diagram of a process 30 according to the embodiment of the present invention. The process 30 is utilized in a mobile of the wireless communications system for detection and recovery from the HARQ DTX/NACK error, and can be seen as the HARQ DTX to NACK error detection program code 220. The process 30 comprises the following steps:
Step 300: Start.
Step 302: Receive a transport block size indicator and a transmission status indicator from the transmitter.
Step 304: Detect a DTX to NACK error according to the transport block size indicator and the transmission status indicator when the transport block size indicator indicates a retransmission and the transmission status indicator indicates a new transmission.
Step 306: Send an error report with information indicating a lost transport block to the transmitter when the DTX to NACK error is detected.
Step 308: End.

According to the process 30, a transport block size indicator and a transmission status is transmitted from the transmitter for each transmitted packet. The transmission status indicator includes a NDI for indicating whether a new transmission or a retransmission is used to transmit the packet. To know this, the UE receiver can compare the present NDI value with the NDI value related to the previous transmission. If the two NDI values are the same, the present transmission is a retransmission; if the two NDI values are different, the present transmission is a new transmission, indicating the packet includes new data. When the UE receiver receives the transmission from the transmitter, if the TB size indicator, namely the TFRI, indicates that the transmission is a retransmission, and the transmission status indicator, i.e. the NDI, indicates that the transmission is new, the DTX/NACK error is detected. To recover from the DTX/NACK error, the UE receiver sends an error report to the transmitter indicating that the transport block was lost. The error report sent to the transmitter can implicitly indicate that the lost transport block is due to the DTX to NACK error. Then, the transmitter can send a local NACK to an upper layer to recover from the DTX to NACK error.

In summary, the present invention detects the DTX/NACK error when the TFRI indicates a retransmission and the NDI indicates a new transmission, and sends an error report to the transmitter to prevent losing the packet. Compared to the prior art, the transmitter in the present invention can respond more quickly to the residual errors caused by the DTX/NACK error, and reduces delays caused by detection of lost packets in the upper layer.

## Claims

1. A method of detecting and recovering from a DTX to NACK error in a hybrid automatic retransmission request, called HARQ hereinafter, receiver of a mobile communications system comprising:
receiving a transport block size indicator and a transmission status indicator sent from an HARQ transmitter, the transport block size indicator and the transmission status indicator corresponding to a packet (302); and
**characterized by** detecting the DTX to NACK error according to the transport block size indicator and the transmission status indicator(304); and
sending an error report with information indicating a lost transport block to the HARQ transmitter when the DTX to NACK error is detected(306).

2. The method of claim 1 **characterized in that** detecting the DTX to NACK error according to the transport block size indicator and the transmission status indicator comprises determining that the transport block size indicator indicates that the transmission is a retransmission and the transmission status indicator indicates that the transmission is a new transmission.

3. The method of claim 1 **characterized in that** the error report indicates that the lost transport block is due to the DTX to NACK error.

4. The method of claim 1, **characterized in that** the method further comprises the HARQ transmitter sending a local NACK to an upper layer to recover from the DTX to NACK error.

5. The method of claim 1, **characterized in that** the transmission status indicator comprises a data description indicator for indicating whether a new transmission or a retransmission is used to transmit the packet.

6. A communications device (100) of a wireless communications system utilized for detecting and recovering from a DTX to NACK error in a transmission in a hybrid automatic retransmission request (HARQ) process of a mobile communications system, the communications device (100) comprising:
a control circuit (106) for realizing functions of the communications device (100);
a central processing unit (108) installed in the control circuit (106), for executing a program code (112) to command the control circuit (106); and
a memory (110) coupled to the central processing unit (108) and comprising:
program code (112) executed for receiving a transport block size indicator and a transmission status indicator sent from an HARQ transmitter, the transport block size indicator and the transmission status indicator corresponding to a packet (302); and
**characterized in that** the memory (110) further comprises program code (112) executed for detecting the DTX to NACK error according to the transport block size indicator and the transmission status indicator (304)and program code (112) executed for sending an error report with information indicating a lost transport block to the HARQ transmitter when the DTX to NACK error is detected (306).

7. The communications device of claim 6, **characterized in that** execution of the program code (112) for detecting the DTX to NACK error according to the transport block size indicator and the transmission status indicator determines whether the transport block size indicator indicates that the transmission is a retransmission and the transmission status indicator indicates that the transmission is a new transmission.

8. The communications device of claim 6, **characterized in that** the error report indicates that the lost transport block is due to the DTX to NACK error.

9. The communications device of claim 6, **characterized in that** the transmission status indicator comprises a data description indicator for indicating whether a new transmission or a retransmission is used to transmit the packet.

10. A communications device (100) of a wireless communications system utilized for detecting and recovering from a DTX to NACK error in a transmission in a hybrid automatic retransmission request (HARQ) process of a mobile communications system, the communications device (100) comprising:
a control circuit (106) for realizing functions of the communications device (100);
a central processing unit (108) installed in the control circuit (106), for executing a program code (112) to command the control circuit (106); and
a memory (110) coupled to the central processing unit (108) and comprising:
program code (112) executed for transmitting a packet;
program code (112) executed for sending a transport block size indicator and a transmission status indicator of the packet;
**characterized in that** the memory (110) further comprises program code (112) executed for receiving an error report which indicates that a lost transport block is due to a DTX to NACK error and program code (112) executed for sending a local NACK to an upper layer to recover from the DTX to NACK error.
